# NEUE EUROPÄISCHE PATENTSCHRIFT

(11) **EP 1 694 768 B2**
(45) Veröffentlichungstag und Bekanntmachung des Hinweises auf die Entscheidung über den Einspruch: **03.08.2011**
(45) Hinweis auf die Patenterteilung: 14.02.2007
(21) Anmeldenummer: 04803803.8
(22) Anmeldetag: 13.12.2004
(51) Int. Cl.: C08L 27/02, C08K 3/24, C08K 5/098

(54) **STABILISATORENZUSAMMENSETZUNG FÜR HALOGENIERTE POLYMERE**
STABILIZER COMPOSITION FOR HALOGENATED POLYMERS
COMPOSITION DE STABILISANT POUR POLYMERES HALOGENES

(30) Priorität: 17.12.2003 DE 10359318
(43) Veröffentlichungstag der Anmeldung: 30.08.2006
(73) Patentinhaber: Baerlocher GmbH, 85716 Unterschleissheim (DE)
(72) Erfinder: MÜLDER, Frank, 85235 Odelzhausen/Sittenbach (DE); SANDER, Hans-Jürgen, 64653 Lorsch (DE)
(74) Vertreter: Fiesser, Gerold Michael
(86) Internationale Anmeldenummer: PCT/EP2004/014172
(87) Internationale Veröffentlichungsnummer: WO 2005/059027

(56) Entgegenhaltungen:
- EP-A1- 1 565 517
- EP-A2- 0 394 547
- EP-A2- 0 457 471
- WO-A-02/068526
- WO-A1-91/08984
- WO-A1-92/13914
- WO-A1-02/092686
- WO-A1-02/094919
- DE-A1- 10 129 857
- JP-A- 4 050 250
- JP-A- 7 149 979
- JP-A- 8 283 499
- DATABASE WPI Section Ch, Week 198347 Derwent Publications Ltd., London, GB; Class A60, AN 1983-822923 XP002328283 & JP 58 173159 A (ADEKA ARGUS CHEM CO LTD) 12. Oktober 1983 (1983-10-12)
- DATABASE WPI Section Ch, Week 199034 Derwent Publications Ltd., London, GB; Class A14, AN 1990-258394 XP002328284 & JP 02 182741 A (SHINETSU CHEM IND CO LTD) 17. Juli 1990 (1990-07-17)

## Beschreibung

Die vorliegende Erfindung betrifft Stabilisatorzusammensetzungen für halogenierte Polymere, Polymerzusammensetzungen, die derartige Stabilisatorzusammensetzungen enthalten, sowie Formkörper, die unter Verwendung der beschriebenen Stabilisatorzusammensetzungen oder Polymerzusammensetzungen hergestellt werden. Die Stabilisatorzusammensetzungen enthalten Perchlorate und Bleisalze.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt.

Die genannten Probleme werden üblicherweise durch den Einsatz von Stabilisatoren gelöst, die dem halogenhaltige Polymeren vor oder während der Verarbeitung zugegeben werden. Zu derartigen bekannten Stabilisatoren zählen beispielsweise die Blei-Stabilisatoren, Barium-Stabilisatoren, Cadmium-Stabilisatoren, Organozinn-Stabilisatoren sowie Barium-Cadmium-, Barium-Zink- oder Calcium-Zink-Stabilisatoren.

Seit langer Zeit werden daher bei der Verarbeitung halogenhaltiger Polymerer Stabilisatoren zugesetzt, welche einen Abbau des halogenhaltigen Polymeren während der Verarbeitung verhindern sollen. Zwar wurden insbesondere in der jüngeren Vergangenheit viele vielversprechende Versuche gestartet, Schwermetalle aus Stabilisatorzusammensetzungen zu eliminieren. Bisher besteht jedoch in vielen Bereichen noch Bedarf an Stabilisatorzusammensetzungen, welche Eigenschaften aufweisen, wie sie sich häufig nur unter Einsatz von Schwermetallen erzielen lassen.

Bei den aus dem Stand der Technik bekannten Stabilisatorzusammensetzungen handelt es sich häufig um Gemische, die Bleisalze enthalten. Während insbesondere Zusammensetzungen, die Bleisalze enthalten, für Ihre gute Stabilisierungswirkung bekannt sind, greifen die aus dem Stand der Technik bekannten Zusammensetzungen jedoch bei Anwendung besonders sensibler Testverfahren, wie sie in verschiedenen Ländern durchgeführt werden bzw. als Zulassungsvoraussetzung von Stabilisatorzusammensetzungen gelten, zu kurz.

Die EP 0 313 113 Al beschreibt als Bleistabilisator der neueren Generation ein 3-basisches Bleidimethylolpropionat sowie eine diese Verbindung enthaltende Stabilisatorzusammensetzung für halogenhaltige Vinylpolymerisate. Grundsätzlich lassen sich mit den dort beschriebenen Stabilisatoren zwar gute Stabilisierungsergebnisse erzielen. Die Einsatzmenge der Stabilisatoren ist jedoch in Relation zum erzielten Stabilisierungsergebnis hoch.

Besonders anspruchsvolle Tests zur Bestimmung der Stabilisierungswirkung, beispielsweise der Test nach DIN 53381 Teil 1 Verfahren B (DHC-Test), insbesondere jedoch der Test nach UEAtc, wie er insbesondere in Frankreich für die Qualitätsprüfung von PVC eingesetzt wird, das zur Herstellung von Fensterrahmen eingesetzt werden soll, stellen erhöhte Anforderungen an die Wirkung von Stabilisatoren. Eine Stabilisatorzusammensetzung, die im Rahmen konventioneller Tests durchaus brauchbare Stabilisierungseigenschaften zeigt, scheitert jedoch häufig an den Qualitätsanforderungen des Kunden und den Prüfmethoden, wie sie durch die letztgenannten, insbesondere durch den UEAtc-Test vorgegeben werden.

Es bestand daher ein Bedürfnis nach einer Stabilisatorkombination für halogenierte Polymere, die auch besonders hohen Qualitätsanforderungen Rechnung trägt. Ein besonderes Bedürfnis bestand nach einer Stabilisatorkombination, die bei der Herstellung von Formkörpern aus halogenhaltigen Polymeren eine gute Anfangsfarbe gewährleistet und die auch bei kurzzeitigen Produktionsunterbrechungen und einer damit einhergehenden höheren thermischen Belastung des Werkstoffs erhalten bleibt. Weiterhin bestand ein Bedürfnis nach einer Stabilisatorkombination, welche die benötigte Menge an Schwermetallen minimiert und trotzdem eine ausgezeichnete Stabilisierungswirkung zeigt. Insbesondere bestand ein Bedarf nach einer Stabilisatorkombination, die auch unter den Bedingungen des UEAtc-Tests ausgezeichnete Stabilisierungsergebnisse zeigt.

Der vorliegenden Erfindung lag damit die Aufgabe zugrunde, Stabilisatorkombinationen für halogenhaltige Polymere zur Verfügung zustellen, welche die obengenannten Bedürfnisse befriedigen. Weiterhin lag der vorliegenden Erfindung die Aufgabe zugrunde, ein entsprechendes Verfahren zur Stabilisierung halogenhaltiger Polymerer zur Verfügung zu stellen. Darüber hinaus lag der vorliegenden Erfindung die Aufgabe zugrunde, Polymerzusammensetzungen zur Verfügung zu stellen, welche auch unter den Bedingungen des UEAtc-Tests ausgezeichnete Stabilität zeigen.

Die der Erfindung zugrundeliegenden Aufgaben werden durch eine Stabilisatorzusammensetzung, ein Verfahren zur Stabilisierung halogenhaltiger Polymerer und eine Polymerzusammensetzung gelöst, wie sie im nachfolgenden Text beschrieben sind.

Gegenstand der vorliegenden Erfindung ist daher eine Stabilisatorzusammensetzung für halogenhaltige Polymere, mindestens enthaltend eine Bleiverbindung oder ein Gemisch aus zwei oder mehr Bleiverbindungen und ein Salz einer halogenhaltigen Oxysäure oder ein Gemisch aus zwei oder mehr Salzen von einer oder mehr halogenhaltigen Oxysäuren, wobei die Stabilisatorzusammensetzung mindestens ein Salz einer halogenhaltigen Oxysäure in geträgerter Form enthält.

Unter einer "Stabilisatorzusammensetzung" wird im Rahmen der vorliegenden Erfindung eine Zusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich eine erfindungsgemäße Stabilisatorzusammensetzung dem zu stabilisierenden, halogenhaltigen Polymeren während der Verarbeitung beizumischen.

Eine erfindungsgemäße Stabilisatorzusammensetzung weist mindestens zwei Bestandteile auf. Als einen ersten Bestandteil enthält eine erfindungsgemäße Stabilisatorzusammensetzung mindestens eine Bleiverbindung.

Als Bleiverbindungen eignen sich im Rahmen der vorliegenden Erfindung grundsätzlich alle organischen oder anorganischen Substanzen, die einen Gehalt an Blei in ionischer oder koordinierter oder metallischer Form aufweisen. Besonders geeignet sind beispielsweise basische Bleisalze von anorganischen Säuren wie dreibasisches Bleisulfat, vierbasisches Bleisulfat, zweibasisches Bleiphosphit oder zweibasisches Bleiphosphit-sulfit oder Bleicarbonat (Bleiweiß), Bleisalze von linearen oder verzweigten, gesättigten oder ungesättigten, aliphatischen oder cycloaliphatischen oder aromatischen organischen Mono- oder Polycarbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, divalente Carbonsäuren bzw. deren Monoester wie Oxalsäure, Malonsäure, Maleinsäure, Fumarsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, tri- oder tetravalente Carbonsäuren bzw. deren Mono-, Di- oder Triester wie Hemimellithsäure, Trimellithsäure, Pyromellithsäure oder Zitronensäure, oder dimerisierte oder trimerisierte Linolsäure, Acrylsäure, Methacrylsäure sowie die im weiteren Verlauf dieses Textes erwähnten Mono- oder Polycarbonsäuren. Ebenfalls geeignet sind cycloaliphatische Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Besonders geeignet sind dabei neutrales oder basisches Bleistearat, Bleiweiß, 3- oder 4-basisches Bleisulfat, 2-basisches Bleiphosphit, 2-basisches Bleiphthalat oder 4-basisches Bleifumarat.

Ebenfalls als Bleiverbindungen geeignet sind Bleiverbindungen, wie sie durch Umsetzung von Bleioxid mit organischen Hydroxycarbonsäuren wie Dimethylolpropionsäure erhältlich sind. Derartige Verbindungen und ihre Herstellung werden beispielsweise in der EP 0 313 113 beschrieben, wobei die Offenbarung dieser Druckschrift hinsichtlich Bleiverbindungen, wie sie durch Umsetzung von Bleioxid mit organischen Hydroxycarbonsäuren erhältlich sind als Bestandteil der Offenbarung des vorliegenden Texts angesehen werden.

Eine erfindungsgemäße Stabilisatorzusammensetzung enthält beispielsweise nur eine Bleiverbindung. Es ist jedoch erfindungsgemäß ebenso möglich und vorgesehen, dass eine erfindungsgemäße Stabilisatorzusammensetzung ein Gemisch aus zwei oder mehr Bleiverbindungen enthält. Es ist aber beispielsweise möglich, dass eine oder mehrere Bleiverbindungen anorganischer und eine oder mehrere Bleiverbindungen organischer Natur sind. Es ist jedoch ebenfalls möglich, dass ausschließlich ein Gemisch von anorganischen Bleiverbindungen oder ein Gemisch von organischen Bleiverbindungen eingesetzt wird. Im Rahmen einer bevorzugten Ausführungsform der vorliegenden Erfindung enthält eine erfindungsgemäße Stabilisatorzusammensetzung ein Gemisch aus zwei oder mehr, beispielsweise ein Gemisch aus 2, 3, 4 oder 5 unterschiedlichen Bleiverbindungen. Im Rahmen einer weiteren Ausführungsform der vorliegenden Erfindung enthält eine erfindungsgemäße Stabilisatorzusammensetzung ein Gemisch aus einer, zwei oder drei anorganischen Bleiverbindungen und einer, zwei oder drei organischen Bleiverbindungen. Im Rahmen einer weiteren Ausführungsform der vorliegenden Erfindung enthält eine erfindungsgemäße Stabilisatorzusammensetzung ein Gemisch aus Bleiphosphit oder Sulfat oder deren Gemisch und mindestens einer organischen Bleiverbindung, insbesondere einem Bleisalz einer organischen Carbonsäure.

Der Gehalt einer erfindungsgemäßen Stabilisatorzusammensetzung an Bleiverbindungen, immer bezogen auf die gesamte Stabilisatorzusammensetzung, beträgt insgesamt mindestens etwa 5 Gew.-%. Im Rahmen einer bevorzugten Ausführungsform der vorliegenden Erfindung beträgt der Gehalt einer erfindungsgemäßen Stabilisatorzusammensetzung an einer oder mehr Bleiverbindungen etwa 10 bis etwa 95 Gew.-%. Eine erfindungsgemäße Zusammensetzung kann dabei beispielsweise auch innerhalb dieser Grenzen liegende Gehalte an Bleiverbindungen aufweisen, beispielsweise etwa 20 bis etwa 90 Gew.-% oder etwa 30 bis etwa 75 Gew.-% oder im wesentlichen beliebige dazwischen liegende Werte, sofern entsprechende Bleigehalte eine ausreichende Stabilisierung bewirken.

Wenn eine erfindungsgemäße Stabilisatorzusammensetzung anorganische und organische Bleiverbindungen enthält, so beträgt dass Gewichtsverhältnis von anorganischen zu organischen Bleiverbindungen vorzugsweise etwa 100 : 1 bis etwa 1 : 100. Es hat sich jedoch in einigen Fällen als vorteilhaft herausgestellt, wenn der Anteil an anorganischen Bleiverbindungen den Anteil an organischen Bleiverbindungen in solchen Fällen übersteigt. So werden im Rahmen einer weiteren Ausführungsform der vorliegenden Erfindung beispielsweise anorganische und organische Bleiverbindungen in einem Verhältnis von etwa 1 : 1 bis etwa 30 : 1, beispielsweise in einem Verhältnis von etwa 2 : 1 bis etwa 10 : 1 eingesetzt.

Neben einer Bleiverbindung oder einem Gemisch aus zwei oder mehr Bleiverbindungen, wie sie beispielsweise oben beschrieben wurden, enthält eine erfindungsgemäße Stabilisatorzusammensetzung noch mindestens ein Salz einer halogenhaltigen Oxysäure oder ein Gemisch aus zwei oder mehr Salzen einer halogenhaltigen Oxysäure oder Gemisch aus zwei oder mehr Salzen verschiedener halogenhaltiger Oxysäuren.

Als mindestens eine weitere Verbindung sind beispielsweise Salze der halogenhaltigen Oxysäuren, insbesondere die Perchlorate, geeignet. Beispiele für geeignete Perchlorate sind diejenigen der allgemeinen Formel M(ClO₄)ₙ, wobei M für Li, Na, K, Mg, Ca, Sr, Zn, Al, La oder Ce steht. Der Index n steht entsprechend der Wertigkeit von M für die Zahl 1, 2 oder 3. Die genannten Perchloratsalze können mit Alkoholen (Polyolen, Cyclodextrinen) oder Etheralkoholen beziehungsweise Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglykole, sowie Di-, Tri- und Tetrapentaerythrit oder Polyvinylalkohol in verschiedenen Polymerisations- und Verseifungsgraden. Als Polyolpartialester sind Glycerinmonoether und Glycerinmonothioether bevorzugt. Ebenfalls geeignet sind Zuckeralkohole.

Die Perchloratsalze können dabei in verschiedenen gängigen Darreichungsformen eingesetzt werden, beispielsweise als Salz oder als wässrige Lösung, aufgezogen auf ein geeignetes Trägermaterial wie PVC, Calciumsilikat, Zeolithe oder Hydrotalcite oder eingebunden durch chemische Reaktion in einen Hydrotalcit. Eine als Bestandteil der erfindungsgemäßen Stabilisatorzusammensetzung geeignete Kombinationen von Na-Perchlorat und Calciumsilikat kann beispielsweise durch Kombination einer wässrigen Lösung von Na-Perchlorat (Gehalt an Na-Perchlorat etwa 60% oder mehr) mit Calciumsilikat, beispielsweise einem synthetischen, amorphen Calciumsilikat, erfolgen. Geeignete Teilchengrößen für das einsetzbare Calciumsilikat liegen beispielsweise bei etwa 0,1 bis etwa 50, beispielsweise etwa 1 bis etwa 20 µm. Geeignete perchlorathaltige Darreichungsformen werden beispielsweise in der US-A 5,034,443 beschrieben, auf deren perchlorathaltige Darreichungsformen betreffende Offenbarung ausdrücklich Bezug genommen wird und wobei diese Offenbarung als Bestandteil der Offenbarung des vorliegenden Textes angesehen wird.

Weitere geeignete Darreichungsformen sind beispielsweise in der EP-A 394,547, der EP-A 457,471 und der WO 94/24200 genannt, auf deren geeignete Darreichungsformen betreffende Offenbarung ausdrücklich Bezug genommen wird und wobei diese Offenbarung als Bestandteil der Offenbarung des vorliegenden Textes angesehen wird.

Beispielsweise kann eine erfindungsgemäße Stabilisatorzusammensetzung nur ein Salz einer halogenhaltigen Oxysäure enthalten. Es ist jedoch im Rahmen der vorliegenden Erfindung ebenso möglich und vorgesehen, dass eine erfindungsgemäße Stabilisatorzusammensetzung ein Gemisch aus zwei oder mehr Salzen halogenhaltiger Oxysäuren enthält. Im Rahmen einer bevorzugten Ausführungsform der vorliegenden Erfindung enthält eine erfindungsgemäße Stabilisatorzusammensetzung Natriumperchlorat.

Im Rahmen einer weiteren Ausführungsform der vorliegenden Erfindung kommen die Salze der halogenhaltigen Oxysäuren in einer erfindungsgemäßen Stabilisatorzusammensetzung in besonders fein verteilter Form vor. Im Rahmen einer bevorzugten Ausführungsform der vorliegenden Erfindung weisen dabei weniger als 10 Gew.-% der Salze der halogenhaltigen Oxysäure oder des Gemischs aus zwei oder mehr solcher Salze Kristallite mit einer Größe von mehr als 3 µm auf. Daraus folgt, dass mindestens etwa 90 Gew.-% der Salze Kristallite mit einer Größe von weniger als 3 µm aufweisen.

Im Rahmen einer weiteren Ausführungsform der vorliegenden Erfindung weist eine erfindungsgemäße Stabilisatorzusammensetzung ein Salz einer halogenhaltigen Oxysäure oder eines Gemischs aus zwei oder mehr halogenhaltigen Oxysäuren auf, wobei weniger als etwa 10 Gew.-% des Salzes oder des Salzgemischs in Form von Kristalliten mit einer Größe von mehr als 1 µm, vorzugsweise mit einer Größe von mehr als 500 nm vorliegen. Im Rahmen einer weiteren bevorzugten Ausführungsform der vorliegenden Erfindung ist eine erfindungsgemäße Stabilisatorzusammensetzung im wesentlichen frei von Kristalliten von Salzen halogenhaltiger Oxysäuren mit einer Kristallitgröße von mehr als etwa 250 nm. Im Rahmen besonders bevorzugter Ausführungsformen der vorliegenden Erfindung enthält eine erfindungsgemäße Stabilisatorzusammensetzung Kristallite von Salzen halogenhaltiger Oxysäuren mit einer Kristallitgröße von mehr als etwa 100 nm oder mehr als etwa 50 nm oder mehr als etwa 20 nm oder mehr als etwa 10 oder etwa 5 nm.

Die Kristallitgrößen von Salzen halogenhaltiger Oxysäuren, wie sie im Rahmen des vorliegenden Textes genannt werden, lassen sich grundsätzlich durch beliebige Methoden zur Bestimmung von Partikelgrößen bestimmen. Grundsätzlich geeignet sind beispielsweise Siebverfahren, Sedimentationsverfahren oder Verfahren, die auf der Beugung oder Brechung von elektromagnetische Wellen, insbesondere von Licht, beruhen. Darüber hinaus geeignet sind elektronenmikroskopische Verfahren wie die Rasterelektronenmikroskopie oder die Transmissionselektronenmikroskopie.

Im Rahmen einer weiteren bevorzugten Ausführungsform der vorliegenden Erfindung ist eine erfindungsgemäße Stabilisatorzusammensetzung frei von Kristalliten, wie sie durch röntgendiffraktometrische Methoden nachweisbar sind. Vorzugsweise enthält eine erfindungsgemäße Stabilisatorzusammensetzung daher Kristallite, deren Größe jenseits der Nachweisgrenze derartige Methoden liegt. Vorzugsweise liegt die Größe derartiger Kristallite unterhalb von etwa 10 Nanometern, vorzugsweise unterhalb von etwa 5 Nanometern.

Ebenfalls als Bestandteil der erfindungsgemäßen Stabilisatorzusammensetzungen geeignet sind auf einem Trägermaterial aufgezogene salze halogenhaltiger Oxysäuren. Besonders geeignet sind dabei Zusammensetzungen, bei denen als Trägermaterial für das Salz einer halogenhaltigen Oxysäure Calcium-Aluminium-Hydroxy-Phosphite der allgemeinen Formel I, CaₓAl₂(OH)₂₍ₓ₊₂₎HPO₃ · m H₂O (I), worin x für eine Zahl von 2 bis 8 und m für eine Zahl von 0 bis 12 steht, eingesetzt werden.

Unter dem Begriff "Trägermaterial" wird dabei ein Material verstanden, das zumindest oberflächlich eine vom Trägermaterial verschiedene Verbindung aufweisen kann, die in fein verteilter Form auf dem Trägermaterial vorliegt. Der Begriff "auf dem Trägermaterial" ist dabei derart auszulegen, dass zumindest ein überwiegender Teil der auf dem Trägermaterial vorliegende Verbindung durch Wechselwirkungen zwischen Trägermaterial und der Verbindung fest auf dem Trägermaterial anhaftet. Die Wechselwirkungen können dabei im wesentlichen beliebig sein, so können beispielsweise ionische, elektrostatische, kovalente oder Van-der-Waals Kräfte oder zwei oder mehr dieser Wechselwirkungen gleichzeitig für eine Anhaftung auf dem Trägermaterial sorgen.

In der obigen Formel I steht x vorzugsweise für eine Zahl von 3 bis 6 und m bedeutet vorzugsweise für eine Zahl von 2 bis 4. Untersuchungen mittels Röntgenbeugung haben gezeigt, dass die erfindungsgemäß als Trägermaterialien eingesetzten Verbindungen hinsichtlich ihrer Kristallstruktur nicht dem Hydrotalcit-Typ angehören.

Zur Herstellung der erfindungsgemäß als Trägermaterialen eingesetzten Calcium-Aluminium-Hydroxy-Phosphite werden beispielsweise Mischungen aus Calciumhydroxid und/oder -oxid, Aluminiumhydroxid und Natriumhydroxid oder aus Calciumhydroxid und/oder -oxid und Natriumaluminat mit phosphoriger Säure in zur Herstellung der erwünschten Verbindungen entsprechenden Mengen in wässrigem Medium umgesetzt und das Reaktionsprodukt in an sich bekannter Weise abgetrennt und gewonnen.

Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsprodukts erfolgt ebenfalls in an sich bekannter Weise, beispielsweise durch Waschen des Filterkuchens mit Wasser und Trocknen des gewaschenen Rückstands bei Temperaturen von beispielsweise 60-130°C, vorzugsweise bei 90-120°C.

Für die Umsetzung kann sowohl ein feinteiliges, aktives Aluminiumhydroxid in Kombination mit Natriumhydroxid, als auch ein Natriumaluminat eingesetzt werden. Calcium kann in Form von feinteiligem Calciumoxid oder -hydroxid oder Mischungen daraus verwendet werden. Die phosphorige Säure kann in unterschiedlich konzentrierter Form eingesetzt werden.

Die Umsetzungstemperaturen liegen vorzugsweise zwischen etwa 50 und 100 °C, weiter vorzugsweise zwischen etwa 60 und 85 °C. Katalysatoren oder Beschleuniger sind nicht erforderlich. Bei den erfindungsgemäßen Verbindungen kann das Kristallwasser ganz oder teilweise durch thermische Behandlung entfernt werden. Bei ihrer Anwendung als Stabilisatoren spalten die erfindungsgemäß einsetzbaren, getrockneten Calcium-Aluminium-Hydroxy-Phosphite bei den beispielsweise für Hart-PVC üblichen Verarbeitungstemperaturen von 160-200° C kein Wasser ab, so dass in den Formteilen keine störende Blasenbildung auftritt.

Neben den oben beschriebenen anorganischen Salzen von halogenhaltigen Oxysäuren kann eine erfindungsgemäße Stabilisatorzusammensetzung auch organische Oniumsalze von halogenhaltigen Oxysäuren enthalten.

Als "Oniumsalz" wird im Rahmen des vorliegenden Textes eine Verbindung bezeichnet, die ein Ammonium-, Sulfonium- oder Phosphoniumsalz darstellt. Bei einem "Oniumsalz" handelt es sich um ein organisches Oniumsalz. Dies bedeutet, dass die Ammonium-, Sulfonium- oder Phosphoniumgruppe des Oniumsalzes mindestens einen organischen Rest trägt. Ein Oniumsalz gemäß der vorliegenden Erfindung kann dabei, je nach Art der Oniumgruppe, 1, 2, 3 oder 4 organische Reste tragen. Die organischen Reste können dabei beispielsweise über eine C-X-Verknüpfung, wobei X für S, N oder P steht, mit dem Oniumrest verbunden sein. Es ist jedoch ebenso möglich, dass die organischen Reste über ein weiteres Heteroatom, beispielsweise ein O-Atom, mit dem Oniumrest verbunden sind.

Ein im Rahmen der vorliegenden Erfindung einsetzbares Salz einer halogenhaltigen Oxysäure, beispielsweise ein Oniumperchlorat, weist mindestens ein positiv geladenes N-, P- oder S-Atom oder zwei oder mehr solcher positiv geladenen N-, P- oder S-Atome oder Gemische aus zwei oder mehr der genannten, positiv geladenen Atomtypen auf.

Im Rahmen der vorliegenden Erfindung werden beispielsweise als Oniumperchlorate Verbindungen eingesetzt, die am N-, S- oder P-Atom mindestens einen organischen Rest und höchstens die maximal mögliche Zahl an organischen Resten tragen. Wenn ein erfindungsgemäß einsetzbares Oniumperchlorat weniger organische Reste trägt, als zur Ausbildung eines positiv geladenen Oniumions notwendig sind, so wird die positive Ladung in üblicher, dem Fachmann bekannter Weise durch Protonierung mittels einer geeigneten Säure erzeugt, so dass das entsprechende Oniumperchlorat in diesem Fall neben einem organischen Rest noch mindestens ein Proton trägt.

Es können erfindungsgemäß daher also Verbindungen als Oniumperchlorate eingesetzt werden, die aufgrund von Protonierungsreaktionen eine positive Ladung aufweisen. Es ist jedoch ebenso möglich im Rahmen der erfindungsgemäßen Stabilisatorkombinationen Oniumperchlorate einzusetzen, die aufgrund einer Peralkylierungsreaktion eine positive Ladung aufweisen. Beispiele für derartige Verbindungen sind Tetraalkylammonium-, Trialkylsulfonium- oder Tetraalkylphosphoniumperchlorate. Es ist jedoch im Rahmen der vorliegenden Erfindung ebenso vorgesehen, dass ein erfindungsgemäß einsetzbares peralkyliertes Oniumperchlorat einen Aryl-, Alkaryl-, Cycloalkyl-, Alkenyl-, Alkinyl- oder Cycloalkenylrest aufweist. Es ist erfindungsgemäß ebenso möglich und vorgesehen, dass ein im Rahmen einer erfindungsgemäßen Stabilisatorzusammensetzung einsetzbares Oniumsalz zwei oder gegebenenfalls mehr unterschiedliche Substituententypen aufweist, beispielsweise einen Alkyl- und einen Cycloalkylrest oder einen Alkyl- und einen Arylrest.

Es ist im Rahmen der vorliegenden Erfindung ebenso möglich und vorgesehen, dass ein im Rahmen einer erfindungsgemäßen Stabilisatorzusammensetzung einsetzbares Oniumsalz Substituenten aufweist, die ihrerseits durch eine oder mehrere funktionelle Gruppen substituiert sind. Als "funktionelle Gruppen" werden dabei Gruppen bezeichnet, welche die Wirkungen der Stabilisatorzusammensetzung verbessern oder zumindest nicht oder nur unwesentlich verschlechtern. Entsprechende funktionelle Gruppen können beispielsweise NH-Gruppen, NH₂-Gruppen, OH-Gruppen, SH-Gruppen, Estergruppen, Ethergruppen, Thioethergruppen, Isocyanuratgruppen oder Ketogruppen oder Gemische aus zwei oder mehr davon umfassen.

Als Phosphoniumperchlorate sind im Rahmen der vorliegenden Erfindung grundsätzlich alle Verbindungen einsetzbar, die durch entsprechende Umsetzung geeigneter Reaktanden zu einem Phosphoniumperchlorat führen. Dabei können erfindungsgemäß einsetzbare Phosphoniumperchlorate beispielsweise durch entsprechende Umsetzung von Tetraalkyl-, Tetracycloaklkyl- oder Tetraarylphosphorhalogeniden erhalten werden. Geeignete Phosphoniumperchlorate leiten sich daher beispielsweise von Tetraalkylphosphorsalzen wie Tetra-n-ethylphosphoniumbromid, Tetra-n-propylphosphoniumbromid, Tetra-n-butylphosphoniumbromid, Tetra-n-isobutylphosphoniumbromid, Tetra-n-pentylphosphoniumbromid, Tetra-n-hexylphosphoniumbromid und dergleichen Tetraalkylphosphorsalzen ab. Weiterhin eignen sich grundsätzlich zum Einsatz im Rahmen der erfindungsgemäßen Stabilisatorzusammensetzungen Phosphoniumperchlorate, die sich beispielsweise von Tetracycloalkylphosphorsalzen oder Tetraarylphosphorsalzen ableiten. Geeignete Phosphoniumperchlorate basieren daher beispielsweise auf Tetracycloalkyl- oder Tetraarylphosphorsalzen wie Tetracyclohexylphosphoniumbromid oder Tetraphenylphosphoniumbromid und dergleichen Tetracycloalkyl- oder Tetraarylphosphorsalzen. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Stabilisatorzusammensetzung keine nachteiligen Wirkungen aufweisen und den Einsatzzweck der Stabilisatorzusammensetzung nicht nachteilig beeinflussen.

Ebenfalls im Rahmen der vorliegenden Erfindung einsetzbar sind organische Phosphoniumperchlorate, die an einem Phosphoratom unterschiedliche Typen organischer Substituenten tragen, die gegebenenfalls unterschiedlich substituiert sein können.

Im Rahmen einer bevorzugten Ausführungsform der vorliegenden Erfindung werden als Phosphoniumperchlorate Tetra-n-butylphosphoniumperchlorat oder Triphenylbenzylphosphoniumperchlorat eingesetzt.

Als Sulfoniumperchlorate sind im Rahmen der vorliegenden Erfindung grundsätzlich alle Verbindungen einsetzbar, die durch entsprechende Umsetzung geeigneter Reaktanden zu einem Sulfoniumperchlorat fuhren. Dabei können erfindungsgemäß einsetzbare Sulfoniumperchlorate beispielsweise durch entsprechende Umsetzung von Sulfiden wie Alkylmonosulfiden, Alkyldisulfiden, Dialkylsulfiden oder Polyalkylsulfiden erhalten werden. Geeignete Sulfoniumperchlorate leiten sich daher beispielsweise von Dialkylsulfiden wie Ethylbenzylsulfid, Allylbenzylsulfid oder Alkyldisulfiden wie Hexandisulfid, Heptandisulfid, Octandisulfid und dergleichen Alkyldisulfiden ab. Weiterhin eignen sich grundsätzlich zum Einsatz im Rahmen der erfindungsgemäßen Stabilisatorzusammensetzungen Sulfoniumperchlorate, die sich beispielsweise von Tricycloalkylsulfoniumsalzen oder Triarylsulfoniumsalzen ableiten. Geeignete Sulfoniumperchlorate basieren daher beispielsweise auf Tricycloalkyl- oder Triarylsulfoniumsalzen wie Tricyclohexylsulfoniumbromid oder Triphenylsulfoniumbromid und dergleichen Tricycloalkyl- oder Triarylsulfoniumsalzen. Ebenfalls geeignet sind Trialkyl-, Triaryl- oder Tricycloalkylsulfoxoniumsalze wie Trimethylsulfoxoniumperchlorat. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Stabilisatorzusammensetzung keine nachteiligen Wirkungen aufweisen und den Einsatzzweck der Stabilisatorzusammensetzung nicht nachteilig beeinflussen.

Ebenfalls im Rahmen der vorliegenden Erfindung einsetzbar sind organische Sulfoniumperchlorate, die an einem Schwefelatom unterschiedliche Typen organischer Substituenten tragen, die gegebenenfalls unterschiedlich substituiert sein können.

Im Rahmen einer bevorzugten Ausführungsform der vorliegenden Erfindung wird als Sulfoniumperchlorat Trimethylsulfoxoniumperchlorat eingesetzt.

Als Ammoniumperchlorate sind im Rahmen der vorliegenden Erfindung grundsätzlich alle Verbindungen einsetzbar, die durch entsprechende Umsetzung geeigneter Reaktanden zu einem Ammoniumperchlorat führen. Dabei können erfindungsgemäß einsetzbare Ammoniumperchlorate beispielsweise durch entsprechende Umsetzung von Aminen oder Amiden wie Alkylmonoaminen, Alkylendiaminen, Alkylpolyaminen, sekundären oder tertiären Aminen oder Dialkylaminen erhalten werden. Geeignete Ammoniumperchlorate leiten sich daher beispielsweise von primären Mono- oder Polyaminoverbindungen mit 2 bis etwa 40, beispielsweise 6 bis etwa 20 C-Atomen ab. Beispielsweise sind dies Ethylamin, n-Propylamin, i-Propylamin, n-Butylamin, sek.-Butylamin, tert.-Butylamin, substituierte Amine mit 2 bis etwa 20 C-Atomen wie 2-(N,N-Dimethylamino)-1-aminoethan. Geeignete Diamine weisen beispielsweise zwei primäre, zwei sekundäre zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan oder tertiäre Amine wie Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Ebenfalls geeignet sind aliphatische Aminoalkohole mit 2 bis etwa 40, vorzugsweise 6 bis etwa 20 C-Atomen, beispielsweise Triethanolamin, Tripropanolamin, Tributanolamin, Tripentanolamin, 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatischcycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Im Rahmen einer weiteren Ausführungsform der vorliegenden Erfindung werden als Ammoniumperchlorate die Perchlorate heterocyclischer Verbindungen eingesetzt, die über ein cyclisches, Aminogruppen aufweisendes Ringsystem verfügen.

Beispielsweise werden dabei die Perchlorate heterocyclischer Aminoalkohole eingesetzt, die mindestens 2, vorzugsweise mindestens 3 Aminogruppen im Ring aufweisen. Als zentraler Ringbestandteil der erfindungsgemäß einsetzbaren Ammoniumperchlorate besonders geeignet sind hierbei die Trimerisierungsprodukte von Isocyanaten.

Eine erfindungsgemäße Stabilisatorzusammensetzung kann im Rahmen der vorliegenden Erfindung beispielsweise nur eines der obengenannten Oniumperchlorate enthalten. Es ist im Rahmen der vorliegenden Erfindung ebenso möglich und auch vorgesehen, dass eine erfindungsgemäße Stabilisatorzusammensetzung ein Gemisch aus zwei oder mehr der obengenannten Oniumperchlorate enthält. Es kann sich dabei um ein Gemisch von zwei oder mehr unterschiedlichen Typen von Oniumperchloraten, d.h. beispielsweise um ein Gemisch von Ammoniumperchloraten und Sulfoniumperchloraten oder Ammoniumperchloraten und Phosphoniumperchloraten oder Sulfoniumperchloraten und Phosphoniumperchloraten oder Ammoniumperchloraten und Sulfoniumperchloraten und Phosphoniumperchloraten handeln. Es ist im Rahmen der Erfindung ebenso möglich, dass eine erfindungsgemäße Stabilisatorzusammensetzung ein Gemisch aus zwei oder mehr Oniumperchloraten eines Typs, d.h. ein Gemisch aus zwei oder mehr Ammoniumperchloraten und ein Gemisch aus zwei oder mehr Sulfoniumperchloraten und ein Gemisch aus zwei oder mehr Phosphoniumperchloraten enthält.

Der Gehalt einer erfindungsgemäßen Zusammensetzung an Salzen einer halogenhaltigen Oxysäure oder an einem Gemisch aus zwei oder mehr Salzen einer halogenhaltigen Oxysäure oder einem Gemisch aus zwei oder mehr Salzen verschiedener halogenhaltiger Oxysäuren beträgt im Rahmen der vorliegenden Erfindung, jeweils bezogen auf die gesamte Stabilisatorzusammensetzung und das Salz einer halogenhaltigen Oxysäure oder ein Gemisch aus zwei oder mehr davon, etwa 0,01 bis etwa 50 Gew.-%. Besonders geeignet sind im Rahmen der vorliegenden Erfindung Gehalte von etwa 0,1 bis etwa 40 oder etwa 0,2 bis etwa 30 Gew.-%, beispielsweise etwa 0,5 bis etwa 20 Gew.-%, bezogen auf die gesamte Stabilisatorzusammensetzung und das Salz einer halogenhaltigen Oxysäure oder ein Gemisch aus zwei oder mehr davon.

Es hat sich dabei ebenfalls als geeignet herausgestellt, wenn das Verhältnis von Bleiverbindungen zu Salzen einer halogenhaltigen Oxysäure insgesamt in einer erfindungsgemäßen Stabilisatorzusammensetzungen etwa 5000:1 bis etwa 1:1 beträgt. Besonders geeignete Verhältnisse liegen beispielsweise innerhalb eines Bereich von etwa 1000 : 1 bis etwa 3 : 1 oder etwa 500 : 1 bis etwa 5:1.

Neben einer Bleiverbindung oder einem Gemisch aus zwei oder mehr Bleiverbindungen und einem Salz einer halogenhaltigen Oxysäure oder einem Gemisch aus zwei oder mehr derartiger Salze kann eine erfindungsgemäße Stabilisatorzusammensetzung noch einen oder mehrere Zusatzstoffe enthalten.

Als Zusatzstoffe eignen sich beispielsweise anorganische Basen. Bei den anorganischen Basen handelt es sich um feste Verbindungen wie die Hydroxide der Elemente der ersten und zweiten Hauptgruppe des Periodensystems sowie die Hydroxide der Elemente der ersten Nebengruppe des Periodensystems. Besonders geeignet sind Magnesiumhydroxid, Calciumhydroxid, Bariumhydroxid oder Strontiumhydroxid.

Der Gehalt einer erfindungsgemäßen Zusammensetzung an entsprechenden Verbindungen, sofern solche Verbindungen in einer erfindungsgemäßen Stabilisatorzusammensetzung vorliegen, beträgt im Rahmen der vorliegenden Erfindung etwa 0,1 bis etwa 20 Gew.-%.

Im Rahmen einer bevorzugten Ausführungsform der vorliegenden Erfindung enthält eine erfindungsgemäße Stabilisatorzusammensetzung als anorganische Base Calciumhydroxid oder Magnesiumhydroxid, insbesondere Calciumhydroxid.

Als Zusatzstoffe eignen sich weiterhin Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methylepichlorhydrin erhältlich. Die Umsetzung erfolgt zweckmäßigerweise in Gegenwart von Basen.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R'C(O)CHR"-C(O)R"', wie sie beispielsweise auf S. 5 der EP-1 046 668 beschrieben sind, auf die insbesondere im Hinblick auf die Reste R', R" und R"' ausdrücklich Bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoylp-chlorbenzoylmethan, Bis(2-hydroxybenzoyl)methan, 4-Methoxybenzoylbenzoylmethan, Bis(4-methoxybenzoyl)methan, Benzoylformylmethan, Benzoylacetylphenylmethan, 1-Benzoyl-1-acetylnonan, Stearoyl-4-methoxybenzoylmethan, Bis(4-tert butylbenzoyl)methan, Benzoylphenylacetylmethan, Bis(cyclohexanoyl)methan, Dipivaloylmethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, hexyl- oder -octylester oder mehrkernige β-Ketoester wie sie in der EP-A 433 230 beschrieben sind, auf die ausdrücklich Bezug genommen wird, oder Dehydracetsäure sowie deren Zink-, Magnesium- oder Alkalisalze oder die Alkali-, Erdalkali- oder Zinkchelate der genannten Verbindungen, sofern diese existieren.

1,3-Diketoverbindungen können in einer erfindungsgemäßen Stabilisatorzusammensetzung in einer Menge von bis zu etwa 20 Gew.-%, beispielsweise bis zu etwa 10 Gew.-%, enthalten sein.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Aminen wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemäßen Stabilisatorzusammensetzung in einer Menge von bis zu etwa 30 Gew.-%, beispielsweise bis zu etwa 10 Gew.-% enthalten sein.

Weiterhin als Zusatzstoffe geeignet sind beispielsweise Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im wesentlichen in fester Form vorliegt.

Im Rahmen der vorliegenden Erfindung einsetzbare Aminoalkohole weisen im Rahmen einer bevorzugten Ausführungsform der vorliegenden Erfindung beispielsweise einen Schmelzpunkt von mehr als etwa 30 °C, insbesondere mehr als etwa 50 °C auf. Geeignete Aminoalkohole sind beispielsweise Mono- oder Polyhydroxyverbindungen, die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IP-DA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol-, 2-Aminopropanol, 2-Aminobutanol, 3-Aminopropanol, 1-Amino-2-propanol, 2-Amino-2-methyl-1-propanol, 5-Aminopentanol; 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Im Rahmen einer besonders bevorzugten Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind.

Im Rahmen einer besonders bevorzugten Ausführungsform der vorliegenden Erfindung werden dabei heterocyclische Aminoalkohole eingesetzt, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der allgemeinen Formel I 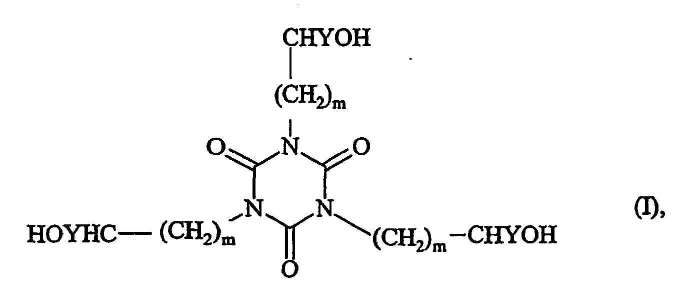 worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxymethyl)isocyanurat (THEIC) als Bestandteil der erfindungsgemäßen Stabilisatorzusammensetzungen.

Eine erfindungsgemäße Stabilisatorzusammensetzung kann beispielsweise nur einen Aminoalkohol enthalten. Es ist im Rahmen der vorliegenden Erfindung jedoch ebenso vorgesehen, dass eine erfindungsgemäße Stabilisatorzusammensetzung ein Gemisch aus zwei oder mehr verschiedenen Aminoalkoholen enthält.

Der Gehalt einer erfindungsgemäßen Stabilisatorzusammensetzungen an derartigen Aminoalkoholen, insbesondere der Gehalt an THEIC, sofern eine erfindungsgemäße Stabilisatorzusammensetzungen solche Aminoalkohole überhaupt enthält, beträgt beispielsweise etwa 0,01 bis etwa 10 Gew.-%.

Weiterhin als Zusatzstoffe in den erfindungsgemäßen Stabilisatorzusammensetzungen geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich Bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einer erfindungsgemäßen Stabilisatorzusammensetzung in einer Menge von bis zu etwa 50 Gew.-%, beispielsweise bis zu etwa 30 Gew.-% enthalten sein.

Ebenfalls im Rahmen der erfindungsgemäßen Stabilisatorzusammensetzungen als Zusatzstoffe geeignet sind beispielsweise Hydrocalumite der allgemeinen Formel II

M²⁺₍₂₊ₓ₎Al³⁺_{(1+y)}(OH)_{(6+z)}A^{k-}ₐ[Bₙ]^{nl-}_{b}*m H₂O (II),

worin M für Calcium, Magnesium oder Zink oder Gemische aus zwei oder mehr davon, A für ein k-wertiges anorganisches oder organisches Säureanion, k für 1, 2 oder 3, B für ein von A verschiedenes anorganisches oder organisches Säureanion steht, n für eine ganze Zahl ≥ 1 steht und, sofern n >1 ist, den Polymerisationsgrad des Säureanions angibt und 1 für 1, 2 3 oder 4 steht und die Wertigkeit des Säureanions angibt, wobei für n = 11 für 2, 3 oder 4 steht und für n > 11 die Wertigkeit der einzelnen Monomereinheiten des Polyanions angibt und für 1, 2, 3 oder 4 steht und nl die Gesamtwertigkeit des Polyanions angibt und die folgenden Regeln für die Parameter x, y, a, b, n, z, und k gelten:
0≤x<0,6,
0≤ y< 0,4, wobei entweder x = 0 oder y = 0,
0 < a < 0,8/n und
z = 1+2x+3y-ka-n/b.

Im Rahmen einer bevorzugten Ausführungsform der vorliegenden Erfindung werden als Zusatzstoffe Verbindungen der allgemeinen Formel II eingesetzt, worin M für Calcium steht, das gegebenenfalls im Gemisch mit Magnesium oder Zink oder Magnesium und Zink vorliegen kann.

In der allgemeinen Formel II steht A für ein k-wertiges anorganisches oder organisches Säureanion, wobei k für 1, 2 oder 3 steht. Beispiele für im Rahmen von erfindungsgemäß einsetzbaren Hydrocalumiten vorliegende Säureanionen sind Halogenidionen, SO₃²⁻, SO₄²⁻, S₂O₃²⁻, S₂O₄²⁻, HPO₃ ²⁻, PO₄³⁻, CO₃²⁻, Alkyl- und Dialkylphosphate, Alkylmercaptide und Alkylsulfonate, worin die Alkylgruppen gleich oder verschieden, geradkettig, verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Tartrat, Citrat sowie Anionen der isomeren Formen der Hydroxyphthalsäure oder der Hydroxymesinsäure. Im Rahmen einer bevorzugten Ausführungsform der vorliegenden Erfindung steht A für ein anorganisches Säureanionen, insbesondere ein Halogenidion, beispielsweise F⁻, Cl⁻ oder Br⁻ , vorzugsweise für Cl⁻.

In der allgemeinen Formel II steht B für ein Säureanion, das von A verschieden ist. Für den Fall, daß in der allgemeinen Formel II n für die Zahl 1 steht, steht Buchstabe B für ein 1-wertiges, anorganisches oder organisches Säureanion, wobei 1 für die Zahl 2, 3 oder 4 steht. Beispiele für im Rahmen von erfindungsgemäß einsetzbaren Verbindungen der allgemeinen Formel II vorliegende Säureanionen B sind beispielsweise O²⁻, SO₃²⁻,SO₄²⁻, S₂O₃²⁻, S₂O₄²⁻, HPO₃²⁻, PO₄³⁻, CO₃²⁻, Alkyl- und Dialkylphosphate, Alkylmercaptide und Alkylsulfonate, worin die Alkylgruppen, gleich oder verschieden, geradkettig oder verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Vorzugsweise steht B im Rahmen der vorliegenden Erfindung in Formel VII für ein Borat oder ein Anion einer gegebenenfalls funktionalisierten Di-, Tri- oder Tetracarbonsäure. Besonders bevorzugt sind dabei Carbonsäureanionen und Anionen von Hydroxycarbonsäuren mit mindestens zwei Carboxylgruppen, wobei Citrate ganz besonders bevorzugt sind.

Für den Fall, dass n in der allgemeinen Formel II für eine Zahl von mehr als 1 steht, steht der Term [Bₙ]ⁿ¹⁻ für ein anorganisches oder organisches Polyanion mit dem Polymerisationsgrad n und der Wertigkeit 1 der einzelnen Monomereinheiten des Polyanions mit der Gesamtwertigkeit nl, wobei 1 gleich oder größer als 1 ist. Beispiele für geeignete Polyanionen [Bₙ]ⁿ¹⁻ sind Polyacrylate, Polycarboxylate, Polyborate, Polysilikate, Polyphosphate oder Polyphosphonate.

In allen obengenannten Fällen können die Säureanionen A und B in einem beliebigen Verhältnis a/b in den Verbindungen der allgemeinen Formel II enthalten sein.

Bei den Verbindungen der allgemeinen Formel II handelt es sich nicht um schichtartig aufgebaute Verbindungen vom Hydrotalcit- bzw. Hydroalumittyp, sondern um eine physikalische Mischung von M²⁺/Aluminiumoxidhydraten mit Salzen zweiwertiger Metalle. Röntgendiffraktogramme der in der erfindungsgemäßen Zusammensetzung eingesetzten Verbindungen der allgemeinen Formel II zeigen eindeutig, daß es sich nicht um diskrete kristalline Verbindungen eines bekannten Typs, sondern um röntgenamorphe Mischungen handelt.

Zur Herstellung der Verbindungen gemäß der allgemeinen Formel II können, bekannten Verfahren folgend, Lösungen bzw. Suspensionen oxidischer Formen der gewünschten Kationen (z.B. NaAlO₂, Ca(OH)₂, Zn(OH)₂, Al(OH)₃) mit Lösungen oder Suspensionen von Salzen oder den entsprechenden Säuren der gewünschten Anionen gemischt und bei Temperaturen zwischen 40 und 95 °C zur Reaktion gebracht werden. Dabei können die Reaktionszeiten zwischen 15 und 300 Minuten variiert werden.

Wenn eine Oberflächenbehandlung der Reaktionsprodukte gewünscht ist, können die Reaktionsprodukte direkt mit dem Oberflächenbehandlungsmittel versetzt, das Produkt durch Filtration von der Mutterlauge getrennt und bei geeigneten Temperaturen zwischen 100 und 250°C getrocknet werden. Die zugesetzte Menge an Oberflächenbehandlungsmittel beträgt beispielsweise etwa 1 bis etwa 20 Gew.-%.

Verbindungen der allgemeinen Formel II können im Rahmen der erfindungsgemäßen Stabilisatorzusammensetzungen in einer Menge von bis zu etwa 50 Gew.-%, beispielsweise bis zu etwa 30 oder bis zu etwa 15 Gew.-% eingesetzt werden.

Ebenfalls als Zusatzstoffe zu den erfindungsgemäßen Stabilisatorzusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder deren Gemische.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate, wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden vorzugsweise Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon. Im Rahmen einer weiteren bevorzugten Ausführungsform der vorliegenden Erfindung weist eine erfindungsgemäße Stabilisatorzusammensetzung Calciumstearat oder Zinkstearat oder deren Gemisch auf.

Eine erfindungsgemäße Stabilisatorzusammensetzung kann die genannten Metalloxide, Metallhydroxide oder Metallseifen oder ein Gemisch aus zwei oder mehr davon in einer Menge von bis zu etwa 50 Gew.-%, beispielsweise in einer Menge von bis etwa 30 Gew.-%, enthalten.

Eine erfindungsgemäße Stabilisatorzusammensetzung kann darüber hinaus weiterhin als Thermostabilisatorkomponente eine Organozinnverbindung oder ein Gemisch aus zwei oder mehr Organozinnverbindungen enthalten.

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die obengenannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabilisatorzusammensetzung kann die beschriebenen Organozinnverbindungen in einer Menge von bis zu etwa 20 Gew.-%, insbesondere bis etwa 10 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(ociylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von bis zu etwa 30 Gew.-%, insbesondere bis etwa 10 Gew.-%, enthalten.

Eine erfindungsgemäße Stabilisatorzusammensetzung kann weiterhin Gleitmittel wie Montanwachs, Fettsäureester, gereinigte oder hydrierte natürliche oder synthetische Triglyceride oder Partialester, Polyethylenwachse, Amidwachse, Chlorparaffine, Glyzerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet.

Eine erfindungsgemäße Stabilisatorzusammensetzung kann die beschriebenen Gleitmittel in einer Menge von bis zu etwa 70 Gew.-%, insbesondere bis etwa 40 Gew.-%, enthalten.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alhylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Di-isooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.-% oder mehr, beispielsweise etwa 0,5 Gew.-%, 1 Gew.-%, 2 Gew.-% oder 5 Gew.-%. Ebenfalls als Bestandteil der erfindungsgemäßen Stabilisatorzusammensetzungen geeignet sind Pigmente. Beispiele für geeignete anorganische Pigmente sind Titandioxid, Ruß, Fe₂O₃, Sb₂O₃, (Ba, Sb)O₂, Cr₂O₃, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe wie sie im "Handbook of PVC Formulating", E. J. Wickson, John Wiley & Sons, Inc., 1993, auf den Seiten 393-449 beschrieben sind oder Verstärkungsmittel wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Geeignete UV-Absorber und Lichtschutzmittel sind dort auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Eine erfindungsgemäße Stabilisatorzusammensetzung kann im Rahmen bevorzugter Ausführungsformen der vorliegenden Erfindung eine komplexe Zusammensetzung aufweisen. Grundsätzlich sind als Bestandteil der erfindungsgemäßen Zusammensetzungen im wesentlichen die bereits im Rahmen dieses Textes genannten Verbindungen einsetzbar. Eine erfindungsgemäße Stabilisatorzusammensetzung kann demnach beispielsweise ausschließlich Verbindungen enthalten, die im Hinblick auf die Anfangsfarbe oder die Farbstabilität wirksam sind. Eine erfindungsgemäße Stabilisatorzusammensetzung kann jedoch darüber hinaus weitere der obengenannten Verbindungen, insbesondere Zusatzstoffe enthalten, welche die Verarbeitbarkeit von halogenhaltigen Kunststoffen oder die Eigenschaften von aus solchen Kunststoffen hergestellten Formkörpern beeinflussen.

Die erfindungsgemäßen Stabilisatorzusammensetzungen eignen sich zur Stabilisierung halogenhaltiger Polymerer.

Beispiele für derartige halogenhaltige Polymere sind Polymere des Vinylchlorids, Vinylharze, die Vinylchlorideinheiten im Polymerrückgrat enthalten, Copolymere von Vinylchlorid und Vinylestem aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE; MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusanunensetzungen geeignet sind Gemische von halogenierten und nicht-halogenierten Polymeren, beispielsweise Gemische der obengenannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der obenge. nannten, halogenierten Polymeren hierzu geeignet sind. Geeignet ist im Rahmen der vorliegenden Erfindung beispielsweise PVC-Rezyklat.

Die Herstellung einer erfindungsgemäßen Stabilisatorzusammensetzung kann im wesentlichen auf beliebige Weise erfolgen. Vorzugsweise werden die Bestandteile einer erfindungsgemäßen Stabilisatorzusammensetzung in einer Reihenfolge vermischt, die einerseits eine möglichst ökonomische Vorgehensweise erlaubt und andererseits zu einer Stabilisatorzusammensetzung führt, die möglichst gute Stabilisierungseigenschaften aufweist. Gegenstand der vorliegenden Erfindung ist daher auch ein Verfahren zur Herstellung einer erfindungsgemä-ßen Stabilisatorzusammensetzung, bei dem mindestens eine Bleiverbindung und mindestens ein Salz einer halogenhaltigen Oxysäure vermischt werden

Ein weiterer Gegenstand der vorliegenden Erfindung betrifft daher eine Polymerzusammensetzung, mindestens enthaltend ein halogeniertes Polymeres und eine erfindungsgemäße Stabilisatorzusammensetzung.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 40 phr, insbesondere etwa 0,5 bis etwa 30 phr oder etwa 1 bis etwa 20 phr. Die Einheit phr steht für "per hundred resin" und betrifft damit Gewichtsteile pro 100 Gewichtsteile Polymeres. Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.%, beispielsweise mindestens etwa 80 oder mindestens etwa 90 Gew.-% beträgt.

Die vorliegende Erfindung betrifft auch ein Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer erfindungsgemäßen Stabilisatorzusammensetzung vermischt wird.

Die Vermischung von Polymeren oder Polymeren und der erfindungsgemäßen Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder, als Emulsion oder als Dispersion, als pastöse Mischung, als trockenen Mischung, als Lösung oder Schmelze zuzusetzen.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzung zur Herstellung von Hart- oder Weich-PVC.

Eine erfindungsgemäße Polymerzusammensetzung kann zu Formkörpern verarbeitet werden. Gegenstand der vorliegenden Erfindung sind daher auch Formkörper, mindestens enthaltend eine erfindungsgemäße Stabilisatorzusammensetzung oder eine erfindungsgemäße Polymerzusammensetzung.

Der Begriff "Formkörper" umfaßt im Rahmen der vorliegenden Erfindung grundsätzlich alle dreidimensionalen Gebilde, die aus einer erfindungsgemäße Polymerzusammensetzung herstellbar sind. Der Begriff "Formkörper" umfaßt im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Gegenstand der Erfindung ist auch die Verwendung eines Gemischs, das mindestens eine Bleiverbindung oder ein Gemisch aus zwei oder mehr Bleiverbindungen und mindestens ein Salz einer halogenhaltigen Oxysäure enthält, wobei mindestens ein Salz einer halogenhaltigen Oxysäure in geträgerter Form vorliegt, zur Stabilisierung von halogenhaltigen Polymeren. Im Rahmen einer bevorzugten Ausführungsform der vorliegenden Erfindung weist das Gemisch dabei mindestens 20 Gew.-% einer Bleiverbindung oder eines Gemischs aus zwei oder mehr Bleiverbindungen oder eines Salzes einer halogenhaltigen Oxysäure oder eines Gemisch aus zwei oder mehr Salzen von einer oder mehr halogenhaltigen Oxysäuren oder beides auf. Die Erfindung wird nachfolgend durch Beispiele näher erläutert.

### Beispiele:

Zur Überprüfung der erfindungsgemäßen Stabilisatorzusammensetzungen wurden die nachfolgend als Beispiele 1 bis 10 bezeichneten Rezepturen hergestellt. Die Zusammensetzung der Rezepturen ist aus der nachfolgenden Tabelle zu entnehmen:

| **Rohstoff** | **1** | **2** | **3** | **4** | **5** | **6** | **7** | **8** | **9** | **10** |
|---|---|---|---|---|---|---|---|---|---|---|
| PVC (Vestolit P 1982K) | 100 | 100 | 100 | 100 | 100 | 100 | 100 | 100 | 100 | 100 |
| Titandioxid | 4,00 | 4,00 | 4,00 | 4,00 | 4,00 | 4,00 | 4,00 | 4,00 | 4,00 | 4,00 |
| Kreide | 6,00 | 6,00 | 6,00 | 6,00 | 6,00 | 6,00 | 6,00 | 6,00 | 6,00 | 6,00 |
| zweibasisches Bleiphosphit | 3,5 | 3,5 | 3,5 | 3,5 | 3,5 | 3,5 | 3,5 | 3,5 | 3,5 | 3,5 |
| zweibasisches Bleistearat | 0,6 | 0,6 | 0,6 | 0,6 | 0,6 | 0,6 | 0,6 | 0,6 | 0,6 | 0,6 |
| neutrales Bleistearat | 0,46 | 0,46 | 0,46 | 0,46 | 0,46 | 0,46 | 0,46 | 0,46 | 0,46 | 0,46 |
| Calciumstearat | 0,35 | 0,35 | 0,35 | 0,35 | 0,35 | 0,35 | 0,35 | 0,35 | 0,35 | 0,35 |
| Distearylphthalat | 0,71 | 0,71 | 0,71 | 0,71 | 0,71 | 0,71 | 0,71 | 0,71 | 0,71 | 0,71 |
| Polyacrylat (Fließhilfe) | 0,9 | 0,9 | 0,9 | 0,9 | 0,9 | 0,9 | 0,9 | 0,9 | 0,9 | 0,9 |
| THEIC | 0,1 | 0,1 | 0,1 | 0,1 | 0,1 | 0,1 | 0,1 | 0,1 | 0,1 | 0,1 |
| | | | | | | | | | | |
| Natriumperchlorat auf inertem Träger | | 0,1 | 0,05 | 0,01 | | | | | | |
| Natriumperchlorat auf Trägermaterial Ca(OH)₂ | | | | | 0,1 | 0,05 | 0,01 | | | |
| Natriumperchlorat auf Trägermaterial CaAlOH-Phosphit | | | | | | | | 0,1 | 0,05 | 0,01 |

Die so erhaltenen Rezepturen wurden jeweils einer Prüfung nach DIN VDE 0472 Teil 614 (HCl-Test) unterzogen. Dabei wurde als Prüfgerät ein Metallblock-Thermostat der Firma Liebisch eingesetzt. Als Proben wurden je Probe drei Probestücke mit Masse 50 ± 5 mg eingesetzt. Die Prüftemperatur betrug 200 ± 0,5°C. Als Auswertung wurden die Einzelwerte sowie der Mittelwert aus den Stabilitätszeiten der drei Probestücke ermittelt. Hierbei wurden folgende Werte erhalten:

| **Probe Nr.** | **Stabilitätszeit 1 [min]** | **Stabilitätszeit 2 [min]** | **Stabilitätszeit 3 [min]** | **Mittelwert [min]** |
|---|---|---|---|---|
| 1 | 66 | 68 | 68 | 67 |
| 2 | 79 | 80 | 82 | 80 |
| 3 | 80 | 82 | 83 | 82 |
| 4 | 77 | 78 | 78 | 78 |
| 5 | 82 | 83 | 83 | 83 |
| 6 | 84 | 84 | 85 | 84 |
| 7 | 80 | 81 | 81 | 81 |
| 8 | 83 | 84 | 85 | 84 |
| 9 | 80 | 81 | 81 | 81 |
| 10 | 74 | 75 | 76 | 75 |

Die Rezepturen gemäß Beispielen 1 bis 10 wurden darüber hinaus einem DHC-Test nach UEAtc (Union Européenne pour l'Agrément techique dans la construction, 1978, Secretariat General: 4, Avenue du Recteur Poincé 75782 Paris Cedex 16) unterzogen.

Dabei wurden die folgenden Stabilitätswerte erhalten:

| **Probenbezeichnung** | **DHC nach UEAtc** |
|---|---|
| 1 | 106 min. |
| 2 | 212 min. |
| 3 | 187 min. |
| 4 | 150 min. |
| 5 | 215 min. |
| 6 | 195 min. |
| 7 | 150 min. |
| 8 | 201 min. |
| 9 | 184 min. |
| 10 | 124 min. |

Die Ergebnisse zeigen eindeutig, dass bereits ein geringer Anteil an Perchloraten, insbesondere an Perchloraten, wie sie im Rahmen der vorliegenden Beispiele eingesetzt wurden, eine signifikante Verbesserung der Thermostabilität im besonders empfindlichen UEAtc-Test zeigt. Die in der Praxis relevanten und zur Gütesicherung bedeutender Gebrauchsgegenstände verifizierten Prüfmethoden zur Bestimmung der Thermostabilität DHC nach DIN und DHC nach UEAtc zeigen eine deutliche Verbesserung der Stabilitätszeiten auf unterschiedlichem Niveau, abhängig von der Messmethode.

## Patentansprüche

1. Stabilisatorzusammensetzung für halogenhaltige Polymere, mindestens enthaltend 5 Gew.-% einer Bleiverbindung oder eines Gemischs aus zwei oder mehr Bleiverbindungen und ein Salz einer halogenhaltigen Oxysäure oder ein Gemisch aus zwei oder mehr Salzen von einer oder mehr halogenhaltigen Oxysäuren, wobei die Stabilisatorzusammensetzung mindestens ein Salz einer halogenhaltigen Oxysäure in geträgerter Form enthält.

2. Stabilisatorzusammensetzung nach Anspruch 1, **dadurch gekennzeichnet, dass** sie das Salz einer halogenhaltigen Oxysäure oder ein Gemisch aus zwei oder mehr solcher Salze in einer Menge von 0,005 bis 0,5 Gew.-% enthält.

3. Stabilisatorzusammensetzung nach einem der Ansprüche 1 bis 2, **dadurch gekennzeichnet, dass** sie mindestens ein Salz einer halogenhaltigen Oxysäure in einer Form enthält, bei der, bezogen auf den Gesamtgehalt an Salz einer halogenhaltigen Oxysäure, weniger als 10 % der Kristallite des Salzes eine Kristallitgröße von mehr als 3 µm aufweisen.

4. Stabilisatorzusammensetzung nach einem der Ansprüche 1 bis 3, **dadurch gekennzeichnet, dass** sie einen oder mehrere Zusatzstoffe enthält.

5. Verfahren zur Herstellung einer Stabilisatorzusammensetzung nach einem der Ansprüche 1 bis 4, **dadurch gekennzeichnet, dass** mindestens eine Bleiverbindung und mindestens ein Salz einer halogenhaltigen Oxysäure vermischt werden.

6. Polymerzusammensetzung, mindestens enthaltend ein halogeniertes Polymeres und eine Stabilisatorzusammensetzung gemäß einem der Ansprüche 1 bis 4.

7. Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer Stabilisatorzusammensetzung gemäß einem der Ansprüche 1 bis 4 vermischt wird.

8. Verwendung einer Stabilisatorzusammensetzung, welche mindestens 5 Gew.-% einer Bleiverbindung und mindestens ein Salz einer halogenhaltigen Oxysäure enthält, wobei mindestens ein Salz einer halogenhaltigen Oxysäure in geträgerter Form vorliegt, zur Stabilisierung von halogenhaltigen Polymeren.

9. Verwendung nach Anspruch 8, **dadurch gekennzeichnet, dass** die Stabilisatorzusammensetzung mindestens 20 Gew.-% einer Bleiverbindung oder eines Gemisches aus zwei oder mehr Bleiverbindungen oder eines Salzes einer halogenhaltigen Oxysäure oder eines Gemisches aus zwei oder mehr Salzen von einer oder mehr halogenhaltigen Oxysäuren oder beides enthält.

## Claims

1. Stabilizer composition for halogen-containing polymers, at least comprising 5% by weight of a lead compound or a mixture of two or more lead compounds, and a salt of a halogen-containing oxyacid or a mixture of two or more salts of one or more halogen-containing oxyacids, where the stabilizer composition comprises at least one salt of a halogen-containing oxyacid on a carrier.

2. Stabilizer composition according to claim 1, **characterized in that** it comprises an amount of from 0.005 to 0.5% by weight of the salt of a halogen-containing oxyacid or of a mixture of two or more such salts.

3. Stabilizer composition according to either of Claims 1 and 2, **characterized in that** it comprises at least one salt of a halogen-containing oxyacid in a form where, based on the total content of salt of a halogen-containing oxyacid, less than 10% of the crystallites of the salt have a crystallite size of more than 3 µm.

4. Stabilizer composition according to any of Claims 1 to 3, **characterized in that** it comprises one or more additives.

5. Process for producing a stabilizer composition according to any of Claims 1 to 4, **characterized in that** at least one lead compound and at least one salt of a halogen-containing oxyacid are mixed.

6. Polymer composition, at least comprising a halogenated polymer and a stabilizer composition according to any of Claims 1 to 4.

7. Process for stabilizing halogen-containing polymers, where a halogen-containing polymer or a mixture of two or more halogen-containing polymers or a mixture of one or more halogen-containing polymers and of one or more halogen-free polymers is mixed with a stabilizer composition according to any of Claims 1 to 4.

8. Use of a stabilizer composition which comprises at least 5% by weight of a lead compound and at least one salt of a halogen-containing oxyacid, where at least one salt of a halogen-containing oxyacid is present on a carrier, for stabilizing halogen-containing polymers.

9. Use according to Claim 8, **characterized in that** the stabilizer composition comprises at least 20% by weight of a lead compound or of a mixture of two or more lead compounds, or of a salt of a halogen-containing oxyacid or of a mixture of two or more salts of one or more halogen-containing oxyacids, or comprises both.

## Revendications

1. Composition de stabilisants pour des polymères halogénés, au moins comprenant 5 % en poids d'un composé de plomb ou d'un mélange de deux ou plusieurs composés de plomb et un sel d'un oxy-acide halogéné ou un mélange de deux ou plusieurs sels d'un ou plusieurs oxy-acides halogénés, la composition de stabilisants comprenant au moins un sel d'un oxy-acide halogéné sous forme supportée.

2. Composition de stabilisants selon la revendication 1, **caractérisée en ce qu'**elle contient le sel d'un oxy-acide halogéné ou un mélange de deux ou plusieurs de ces sels en une quantité de 0,005 à 0,5 % en poids.

3. Composition de stabilisants selon l'une des revendications 1 à 2, **caractérisée en ce qu'**elle contient au moins un sel d'un oxy-acide halogéné sous une forme dans laquelle, par rapport à la teneur totale en sel d'un oxy-acide halogéné, moins de 10 % des cristallites du sel ont une grandeur de cristallite de plus de 3 µm.

4. Composition de stabilisants selon l'une des revendications 1 à 3, **caractérisée en ce qu'**elle contient un ou plusieurs additifs.

5. Procédé destiné à la fabrication d'une composition de stabilisants selon l'une des revendications 1 à 4, **caractérisé en ce qu'**au moins un composé de plomb et au moins un sel d'un oxy-acide halogéné sont mélangés.

6. Composition de polymères, au moins comprenant un polymère halogéné et une composition de stabilisants selon l'une des revendications 1 à 4.

7. Procédé pour stabiliser des polymères halogénés, dans le cas duquel un polymère halogéné ou un mélange de deux ou de plusieurs polymères halogénés ou un mélange d'un ou de plusieurs polymères halogénés et d'un ou de plusieurs polymères non-halogénés est mélangé avec une composition de stabilisants selon l'une des revendications 1 à 4.

8. Utilisation d'une composition de stabilisants qui comprend au moins 5 % en poids d'un composé de plomb et au moins un sel d'un oxy-acide halogéné, dans quel cas au moins un sel d'un oxy-acide halogéné se présente sous forme supportée pour la stabilisation de polymères halogénés.

9. Utilisation selon la revendication 8, **caractérisée en ce que** la composition de stabilisants comprend au moins 20 % en poids d'un composé de plomb ou d'un mélange de deux ou plusieurs composés de plomb ou d'un sel d'un oxy-acide halogéné ou d'un mélange de deux ou plusieurs sels d'un ou de plusieurs oxy-acides halogénés ou les deux.
